# EUROPÄISCHE PATENTSCHRIFT

(11) **EP 3 966 591 B1**
(45) Veröffentlichungstag und Bekanntmachung des Hinweises auf die Patenterteilung: **02.09.2026**
(21) Anmeldenummer: 21748542.4
(22) Anmeldetag: 16.07.2021
(51) Int. Cl.: G01S 7/493, G01S 17/34, G01S 17/42, G01S 17/58, G01S 17/89, G01S 7/481

(54) **VERFAHREN UND VORRICHTUNG ZUR SCANNENDEN ABSTANDS- UND GESCHWINDIGKEITSERMITTLUNG WENIGSTENS EINES OBJEKTS**
METHOD AND DEVICE FOR DETERMINING, BY SCANNING, THE DISTANCE AND SPEED OF AT LEAST ONE OBJECT
PROCÉDÉ ET DISPOSITIF DE DÉTERMINATION, PAR BALAYAGE, DE LA DISTANCE ET DE LA VITESSE D'AU MOINS UN OBJET

(30) Priorität: 16.07.2020 DE 102020118789
(43) Veröffentlichungstag der Anmeldung: 16.03.2022
(73) Patentinhaber: Carl Zeiss AG, 73447 Oberkochen (DE)
(72) Erfinder: HORN, Jan, 80636 München (DE)
(74) Vertreter: Ostertag & Partner Patentanwälte mbB
(86) Internationale Anmeldenummer: PCT/EP2021/069954
(87) Internationale Veröffentlichungsnummer: WO 2022/013422

(56) Entgegenhaltungen:
- US-A1- 2020 182 978
- US-B1- 6 317 073
- US-B2- 10 209 360

## Beschreibung

### HINTERGRUND DER ERFINDUNG

### 1. Gebiet der Erfindung

Die Erfindung betrifft ein Verfahren und eine Vorrichtung zur scannenden Abstands- und Geschwindigkeitsermittlung wenigstens eines Objekts. Das Verfahren bzw. die Vorrichtung kann zur Ermittlung von Abständen sowohl bewegter als auch unbewegter Objekte und insbesondere zur Ermittlung der Topographie bzw. Form eines räumlich ausgedehnten dreidimensionalen Objekts verwendet werden.

### 2. Stand der Technik

Zur optischen Abstandsmessung von Objekten ist u.a. ein auch als LIDAR bezeichnetes Messprinzip bekannt, bei welchem ein optisches Signal zu dem betreffenden Objekt hin ausgestrahlt und nach an dem Objekt erfolgter Rückreflexion ausgewertet wird. In der Praxis kommen sowohl laufzeitbasierte Messsysteme (TOF-LIDAR-Messsysteme, TOF = "time of flight"), bei denen direkt die Laufzeit des Laserlichts zum jeweiligen Objekt und zurück gemessen wird, als auch FMCW-LIDAR-Messsysteme mit Verwendung eines frequenzmodulierten FMCW-Lasers (FMCW= "frequency-modulated continuous wave") zum Einsatz.

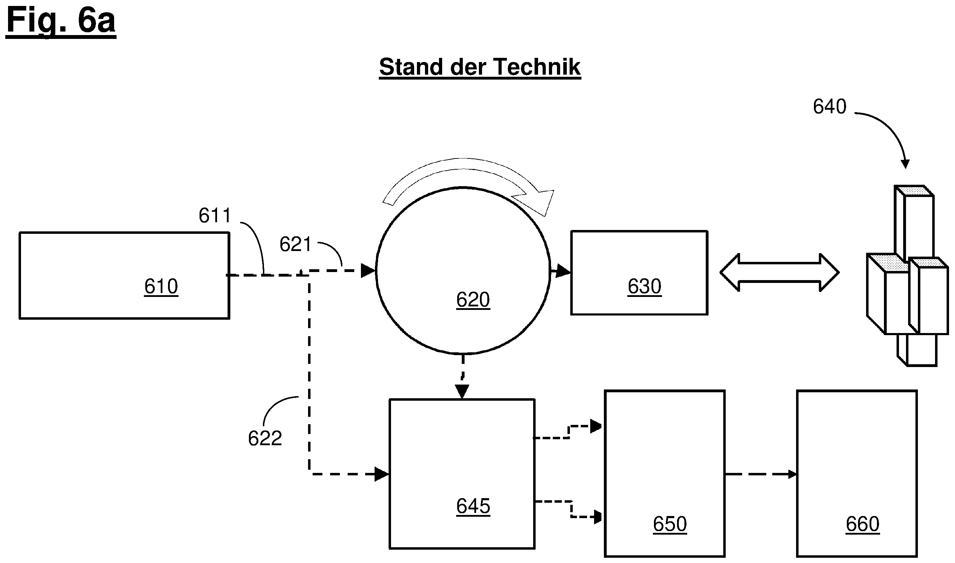

Fig. 6a zeigt lediglich in schematischer Darstellung einen für sich bekannten prinzipiellen Aufbau, in welchem ein von einer Lichtquelle 610 ausgesandtes Signal 611 mit zeitlich veränderter Frequenz (auch als "Chirp" bezeichnet) in zwei Teilsignale aufgespalten wird, wobei diese Aufspaltung z.B. über einen nicht dargestellten Strahlteiler (z.B. einen teildurchlässigen Spiegel oder einen faseroptischen Splitter) erfolgt. Die beiden Teilsignale werden über einen Signalkoppler 645 gekoppelt und an einem Detektor 650 einander überlagert, wobei das erste Teilsignal als Referenzsignal 622 ohne Reflexion an dem mit "640" bezeichneten Objekt zum Signalkoppler 645 und zum Detektor 650 gelangt.

Das zweite am Signalkoppler 645 bzw. am Detektor 650 eintreffende Teilsignal verläuft hingegen als Messsignal 621 über einen optischen Zirkulator 620 und einen Scanner 630 zum Objekt 640, wird von diesem zurückreflektiert und gelangt somit im Vergleich zum Referenzsignal 622 mit einer Zeitverzögerung und entsprechend veränderter Frequenz zum Signalkoppler 645 und zum Detektor 650. Über eine Auswerteeinrichtung 660 wird das vom Detektor 650 gelieferte Detektorsignal relativ zur Messvorrichtung bzw. der Lichtquelle 610 ausgewertet, wobei die zu einem bestimmten Zeitpunkt erfasste Differenzfrequenz zwischen Messsignal 621 und Referenzsignal 622 charakteristisch für den Abstand des Objekts 640 von der Messvorrichtung bzw. der Lichtquelle 610 ist. Dabei kann zum Erhalt zusätzlicher Information hinsichtlich der Relativgeschwindigkeit zwischen dem Objekt 640 und der Messvorrichtung bzw. der Lichtquelle 610 der zeitabhängige Frequenzverlauf des von der Lichtquelle 610 ausgesandten Signals 611 auch so beschaffen sein, dass zwei Abschnitte bzw. Teilsignale vorliegen, in denen die zeitliche Ableitung der von der Lichtquelle 610 erzeugten Frequenz zueinander entgegengesetzt ist, wobei die entsprechenden Abschnitte bzw. Teilsignale dann als "up-chirp" und "down-chirp" bezeichnet werden können.

Aus den für diese beiden Teilsignale bestimmten Differenz- bzw. Schwebungsfrequenzen werden dann sowohl die Dopplerverschiebung *f_{D}* als auch die hinsichtlich des Dopplereffekts korrigierte Schwebungsfrequenz *f_{b}* wie folgt berechnet: ${f}_{b} = \frac{{f}_{bd} + {f}_{bu}}{2}$ ${f}_{D} = \frac{{f}_{bd} - {f}_{bu}}{2}$ wobei *f_{bu}* die Schwebungsfrequenz während des "up-chirp" und *f_{bd}* die Frequenz während des "down-chirp" bezeichnet.

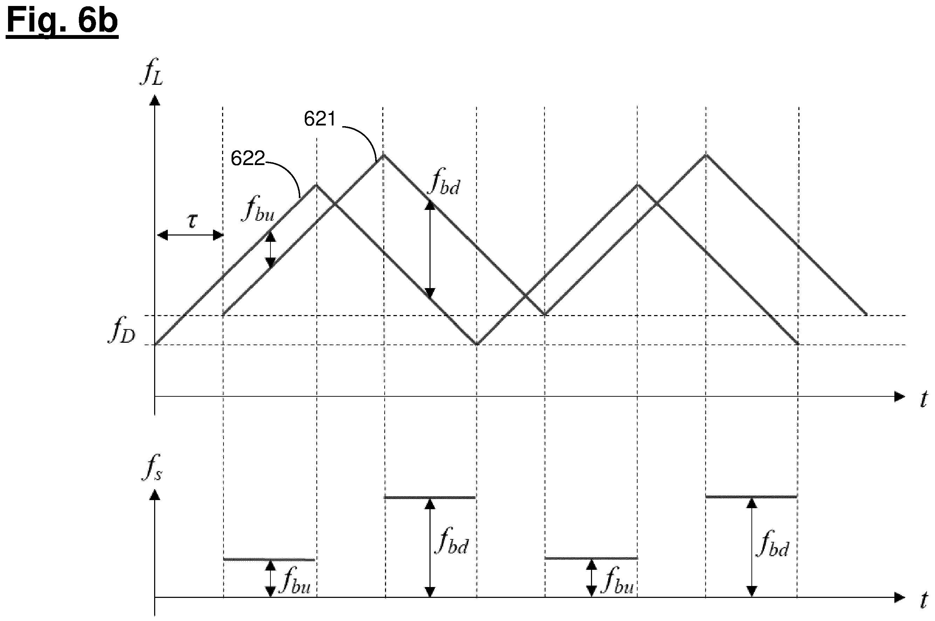

In Fig. 6b sind für Messsignal 621 und Referenzsignal 622 sowohl die Zeitabhängigkeit der Frequenz *f_{L}* als auch die Zeitabhängigkeit der Frequenz *fₛ* des Detektorsignals, welche der jeweiligen Schwebungsfrequenz *f_{bu}, f_{bd}* während des "up-chirp" bzw. während des "down-chirp" entspricht, aufgetragen. Der Zusammenhang zwischen dem Objektabstand d und der hinsichtlich des Dopplereffekts korrigierten Schwebungsfrequenz *f_{b}* ist dann gegeben durch ${f}_{b} = 2 ∗ κ ∗ d / c$ wobei κ die Chirprate der Frequenzdurchstimmung und c die Lichtgeschwindigkeit bezeichnen.

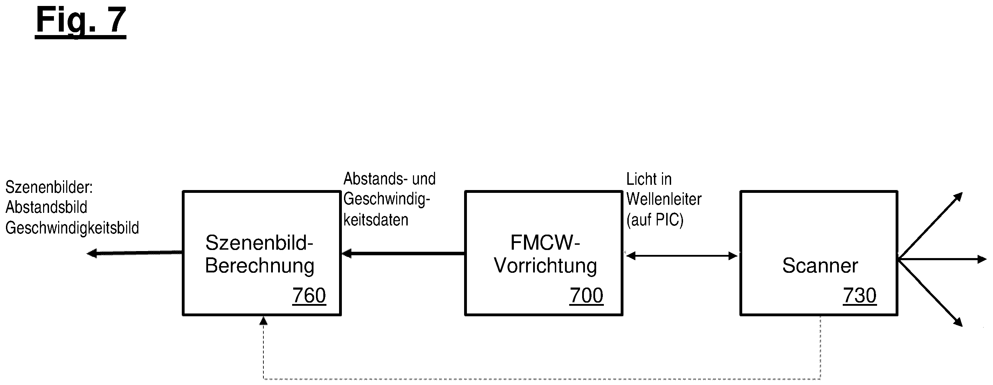

Fig. 7 zeigt ausgehend von dem zuvor anhand von Fig. 6a-6b beschriebenen Aufbau eine schematische Darstellung zur Erläuterung des Signalflusses bei der Abstands- bzw. Geschwindigkeitsberechnung. Dabei umfasst der mit "700" bezeichnete Block ("FMCW-Vorrichtung") sämtliche in Fig. 6a dargestellten Komponenten bis auf den Scanner 630, d.h. die Lichtquelle 610, den optischen Zirkulator 620, den Signalkoppler 645 den Detektor 650 und die Auswerteeinrichtung 660. Zwischen diesem Block bzw. der FMCW-Vorrichtung 700 und dem in Fig. 7 mit "730" bezeichneten Scanner kann die Übertragung der jeweiligen optischen (Mess-)Signale z.B. wellenleiterbasiert auf einem photonisch integrierten Schaltkreis (PIC) realisiert sein. Über die innerhalb der FMCW-Vorrichtung 700 vorhandene Auswerteeinrichtung erfolgt die Berechnung der Abstand- und Geschwindigkeitsdaten unmittelbar auf Basis der Schwebungs- bzw. Differenzfrequenzen (zwischen Mess- und Referenzsignal), und auf dieser Basis über einen Block 760 eine entsprechende Szenenbild-Berechnung unter Bereitstellung eines Abstandsbildes und eines Geschwindigkeitsbildes.

Ein in der Praxis auftretendes Problem ist jedoch, dass die vorstehend dargestellte Abstands- und Geschwindigkeitsermittlung von Annahmen ausgeht, welche u.U. zumindest teilweise nicht erfüllt sind: Konkret liegt den vorstehenden Berechnungen zum einen die Annahme zugrunde, dass die jeweiligen, für die Schwebungsfrequenzen während des "up-chirp" und während des "down-chirp" herangezogenen Messsignale aus derselben Strahlrichtung bzw. von dem gleichen Objektort kommen. Des Weiteren liegt den vorstehenden Berechnungen auch die Annahme zugrunde, dass die Zeitdauer des jeweiligen "up-chirp" bzw. "down-chirp" hinreichend kurz ist, um von einer konstanten Geschwindigkeit des Objekts in der jeweiligen Strahlrichtung bzw. einem konstanten Objektabstand ausgehen zu können.

Insbesondere die o.g. Annahme übereinstimmender Strahlrichtungen bzw. Objektorte der für den "up-chirp" und den "down-chirp" herangezogenen Messsignale ist in Szenarien nicht mehr gerechtfertigt, bei denen etwa infolge einer vergleichsweise schnellen, innerhalb der betrachteten Szene stattfindenden Bewegung z.B. das Messsignal während des "up-chirp" noch von einem Fahrzeug, während des "down-chirp" jedoch - infolge zwischenzeitlicher Weiterbewegung des Fahrzeugs - bereits von einem anderen Objekt (z.B. einem Gebäude, Baum etc.) zurückreflektiert wird.

Des Weiteren erweist sich die Annahme übereinstimmender Strahlrichtungen auch in Szenarien als unzutreffend, in denen die zum Abscannen des Objekts verwendete

Scaneinrichtung selbst eine Weiterbewegung des jeweiligen Messstrahls während des Scanvorgangs bewirkt, weil etwa die Scaneinrichtung ein mechanisch bewegliches Ablenkspiegel in Kombination mit einem dispersiven optischen Element zwecks Realisierung eines zweidimensionalen Scanvorgangs einsetzt.

Da in den vorstehend beschriebenen Szenarien die zur Berechnung der Schwebungsfrequenzen *f_{bu}*, *f_{bd}* herangezogenen Messsignale letztlich aus unterschiedlichen Strahlrichtungen bzw. von unterschiedlichen Objektpunkten stammen, ist eine fehlerhafte Interpretation der Messergebnisse und somit eine fehlerhafte Erfassung der betrachteten Szene die Folge.

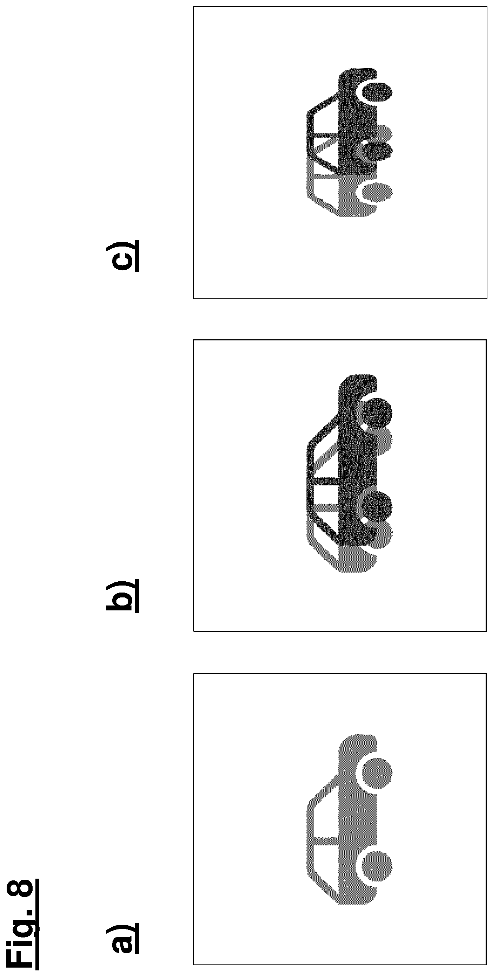

Fig. 8a-8c zeigen lediglich schematische und stark vereinfachte Skizzen zur Veranschaulichung der vorstehenden Überlegungen.

Dabei zeigt Fig. 8a ein Szenario, bei welchem keinerlei Bewegung in der betrachteten Szenerie stattfindet und die sowohl für den "up-chirp" als auch für den "down-chirp" jeweils erhaltenen Schwebungs- bzw. Differenzfrequenzen der gleichen Strahlrichtung des Messsignals bzw. übereinstimmenden Objektpunkten zugeordnet sind. Fig. 8b entspricht einem Szenario, bei welchem das betrachtete Objekt bzw. Fahrzeug sich von links nach rechts bewegt, und Fig. 8c zeigt ein Szenario, bei welchem zusätzlich zu der Objektbewegung von Fig. 8b eine Weiterbewegung des jeweiligen Messstrahls während des Scanvorgangs erfolgt. Während im Szenario von Fig. 8a eine störungsfreie Abbildung der Szene gegeben ist, ergibt sich für die Szenarien von Fig. 8b und Fig. 8c eine fehlerhafte Erfassung.

Zum Stand der Technik wird lediglich beispielhaft auf die Publikationen D. Lowe: "Distinctive image features from scale-invariant keypoints", International Journal of Computer Vision 60 (2004), Nr. 2, S. 91-110 und C. Stiller et al.: "The computation of motion", in: T. Reed (Hrsg.): "Digital Image Sequence Processing, Compression and Analysis", CRC Press (2005), S. 73-108, verwiesen.

Verwiesen wird außerdem auf die Dokumente US 2020/0182978 A1 und US 6,317,073 B1, die jeweils FMCW-LiDAR-Systeme offenbaren, bei denen während des "up-chirp" und des "down-chirp" Differenzfrequenz-Verteilungen ermittelt werden.

Aus der US 10,209,360 B2 ist bekannt, Phasenversätze zwischen gesendetem und empfangenem Licht zu messen.

### ZUSAMMENFASSUNG DER ERFINDUNG

Vor dem obigen Hintergrund ist es eine Aufgabe der vorliegenden Erfindung, ein Verfahren und eine Vorrichtung zur scannenden Abstands- und Geschwindigkeitsermittlung wenigstens eines Objekts bereitzustellen, welche eine möglichst genaue und zuverlässige Abstandsmessung unter zumindest teilweiser Vermeidung der vorstehend beschriebenen Nachteile ermöglichen.

Diese Aufgabe wird durch das Verfahren gemäß den Merkmalen des unabhängigen Patentanspruchs 1 bzw. die Vorrichtung gemäß den Merkmalen des nebengeordneten Patentanspruchs 9 gelöst.

Der Erfindung liegt insbesondere das Konzept zugrunde, die für die Abschnitte bzw. Teilsignale mit unterschiedlicher Zeitabhängigkeit der von der Lichtquelle erzeugten Frequenz (insbesondere also für "up-chirp" und "down-chirp") detektorseitig ermittelten Schwebungsfrequenzen nicht unmittelbar zur Abstands- bzw. Geschwindigkeitsermittlung (auf Basis der eingangs angegebenen Formeln (1) und (2)) heranzuziehen.

Vielmehr erfolgt erfindungsgemäß zunächst eine Anpassung (engl.: "Matching") der für den "up-chip" erhaltenen örtlichen Verteilung von Differenzfrequenz-Werten und/und der für den "down-chirp" erhaltenen Verteilung von Differenzfrequenz-Werten aneinander dahingehend, dass die in den entsprechend angepassten Verteilungen einander korrespondierenden Differenzfrequenz-Werte von Messsignalen stammen, die von ein- und demselben Ort auf dem Objekt bzw. innerhalb der betrachteten Szene reflektiert wurden. Mit anderen Worten werden die Pixel in beiden Differenzfrequenz-Verteilungen so aneinander angeglichen, dass von in den beiden Verteilungen korrespondierenden Pixeln die jeweiligen Informationen vom gleichen Objektpunkt herrühren.

Erfindungsgemäß können dabei die genannten Differenzfrequenz-Verteilungen jeweils für sich genommen als Bild interpretiert werden, so dass besagte Anpassung im Wege einer Koregistrierung (d.h. unter Anwendung einer für sich bekannten Methode der Bildverarbeitung) insoweit miteinander in Übereinstimmung gebracht werden, dass die jeweils entsprechenden Bildbereiche denselben Objektpunkten auf dem Objekt entsprechen.

Indem nun für die Abstands- bzw. Geschwindigkeitsermittlung Differenzfrequenz-Werte erst nach der vorstehend beschriebenen Koregistrierung verwendet werden, wird erfindungsgemäß sichergestellt, dass die letztlich verwendeten Informationen aus dem "up-chirp" und dem "down-chirp" für die Berechnung eines bestimmten Abstands- und Geschwindigkeitswertes auch bzw. vom gleichen Ort innerhalb der betrachteten Szene stammen.

Unter erneuter Bezugnahme auf die o.g. Interpretation der beiden erfindungsgemäß ermittelten Differenzfrequenz-Verteilungen als "Bilder" bedeutet die bei der Erfindung erfolgende Durchführung einer Koregistrierung, dass vor der eigentlichen Abstand- und Geschwindigkeitsberechnung im Wege der Bildverarbeitung eine Transformation wenigstens eines der beiden Bilder in solcher Weise durchgeführt wird, dass beide Bilder vor dem Verrechnen der Differenzfrequenzen zur Deckung gebracht werden, so dass die jeweiligen Pixel bzw. Objektorte für beide Bilder übereinanderliegen.

Gemäß einer Ausführungsform unterscheiden sich die für die Bestimmung der ersten örtlichen Differenzfrequenz-Verteilung und die für die Bestimmung der zweiten örtlichen Differenzfrequenz-Verteilung jeweils herangezogenen Messsignale hinsichtlich der Zeitabhängigkeit der Frequenz des verwendeten optischen Signals voneinander.

Gemäß einer Ausführungsform ist die zum Angleichen der ersten und der zweiten Differenzfrequenz-Verteilung durchgeführte Transformation eine nicht-affine Transformation. Mit anderen Worten geht die zum Angleichen der ersten und der zweiten Differenzfrequenz-Verteilung durchgeführte Transformation über eine rein affine Transformation (welche Verschiebungen, Skalierungen, Drehungen, Scherungen sowie Kombinationen hiervon umfasst) hinaus, so dass die Transformation auch nicht-verzerrungsfrei (engl.: "non-rigid") erfolgt.

Gemäß einer Ausführungsform wird die zum Angleichen der ersten und der zweiten Differenzfrequenz-Verteilung durchgeführte Transformation basierend auf den Differenzfrequenz-Verteilungen berechnet.

Gemäß einer Ausführungsform wird die zum Angleichen der ersten und der zweiten Differenzfrequenz-Verteilung durchgeführte Transformation basierend auf den jeweiligen zu den Differenzfrequenz-Verteilungen gehörenden Signalstärke-Verteilungen berechnet. Dabei können die zu den Differenzfrequenz-Verteilungen gehörenden Signalstärke-Verteilungen zusätzlich oder alternativ zu den eigentlichen Differenzfrequenz-Verteilungen für die Angleichung bzw. die Berechnung der hierzu durchzuführenden Transformation herangezogen werden.

In Ausführungsformen der Erfindung erfolgt somit die zuvor beschriebene Bildanpassung nicht (oder nicht allein) unter Berücksichtigung der Peak-Positionen in den jeweiligen Differenzfrequenz-Verteilungen, sondern zusätzlich oder alternativ auch unter Berücksichtigung der jeweiligen Peakhöhen. Besagte Peakhöhen repräsentieren letztlich die Reflektivität des Objekts (und damit die Helligkeit in einem entsprechenden Graustufenbild), so dass als zusätzliche Information auch Graustufenbilder der betrachteten Szene erhalten und zur Verbesserung des durchgeführten "Matchings" genutzt werden können.

Gemäß einer Ausführungsform werden ein Abstandsbild und ein Geschwindigkeitsbild einer Szene berechnet, wobei jedes Pixel innerhalb des Abstands- bzw. Geschwindigkeitsbildes jeweils einen Abstands- bzw. Geschwindigkeitswert innerhalb der Szene repräsentiert.

Die Erfindung betrifft weiter auch eine Vorrichtung zur scannenden Abstands- und Geschwindigkeitsermittlung wenigstens eines Objekts, welche zur Durchführung eines Verfahrens mit den vorstehend beschriebenen Merkmalen konfiguriert ist. Zu Vorteilen und vorteilhaften Ausgestaltungen der Vorrichtung wird auf die obigen Ausführungen im Zusammenhang mit dem erfindungsgemäßen Verfahren Bezug genommen.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

### KURZE BESCHREIBUNG DER ZEICHNUNGEN

Es zeigen:
- Figur 1-3: schematische Darstellungen zur Erläuterung eines erfindungsgemäßen Verfahrens bzw. einer erfindungsgemäßen Vorrichtung zur Abstands- und Geschwindigkeitsermittlung in einer ersten Ausführungsform;
- Figur 4-5: schematische Darstellungen zur Erläuterung eines erfindungsgemäßen Verfahrens bzw. einer erfindungsgemäßen Vorrichtung zur Abstands- und Geschwindigkeitsermittlung in einer weiteren Ausführungsform;
- Figuren 6-7: schematische Darstellungen zur Erläuterung eines herkömmlichen Verfahrens bzw. einer Vorrichtung zur Abstands- und Geschwindigkeitsermittlung;
- Figur 8a-8c: schematische Skizzen zur Veranschaulichung eines der vorliegenden Erfindung zugrundeliegenden Problems
- Figur 9: Draufsicht auf eine Szene, bei der ein erfindungsgemäßer LIDAR Scanner drei Wände abscannt, die unterschiedlich weit vom Scanner entfernt sind;
- Figur 10: eine schematische Darstellung der Scantrajektorie auf den drei Wänden;
- Figur 11: die zueinander verschobenen Differenzfrequenz-Verteilungen aufgrund des zeitlichen Versatzes von Up-Chirp und Down-Chirp; und
- Figur 12: die Differenzfrequenz-Verteilungen nach der Registrierung.

### DETAILLIERTE BESCHREIBUNG BEVORZUGTER AUSFÜHRUNGSFORMEN

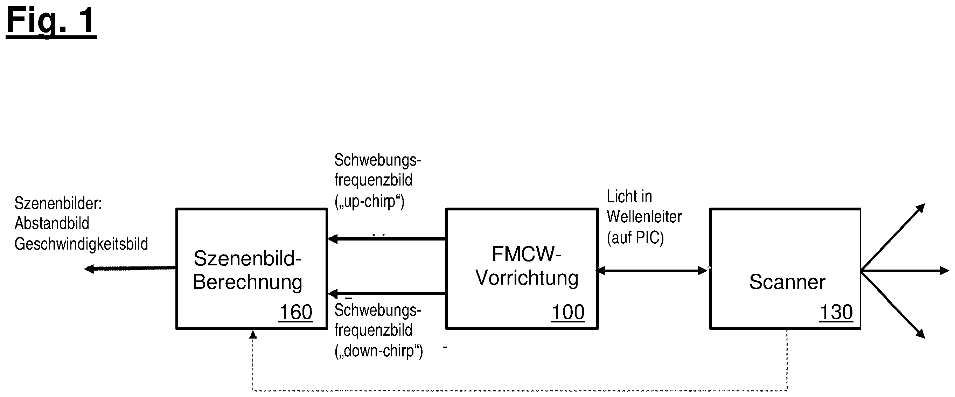

Im Weiteren werden Aufbau und Funktionsweise einer erfindungsgemäßen Vorrichtung in beispielhaften Ausführungsformen unter Bezugnahme auf die schematischen Darstellungen in Fig. 1-5 sowie 9 bis 12 beschrieben.

### 1. Erstes Ausführungsbeispiel

Der mit "100" bezeichnete Block ("FMCW-Vorrichtung") umfasst entsprechend dem anhand von Fig. 6a dargestellten Aufbau die herkömmlichen Komponenten Lichtquelle, optischer Zirkulator, Signalkoppler und Detektor. Die Lichtquelle weist einen frequenzmodulierten FMCW-Laser (FMCW= "frequency-modulated continuous wave") zum Aussenden eines optischen Signals mit zeitlich variierender Frequenz ("chirp") auf. Bei dem Laser kann es sich z.B. um einen DFB-Laser, um einen WGMR-Laser oder auch um einen VCSEL-Laser handeln. Zwischen der FMCW-Vorrichtung 100 und dem in Fig. 1 mit "130" bezeichneten Scanner kann die Übertragung der jeweiligen optischen (Mess-)Signale z.B. wellenleiterbasiert auf einem photonisch integrierten Schaltkreis (PIC) realisiert sein.

Des Weiteren umfasst die FMCW-Vorrichtung 100 auch eine vereinfachte Auswerteeinrichtung, welche anhand des vom Detektor gelieferten Detektorsignals zwar Schwebungsfrequenzen und entsprechende Schwebungs- bzw. Differenzfrequenz-Verteilungen ermittelt, jedoch im Unterschied zum herkömmlichen Konzept von Fig. 6-7 unmittelbar auf diesen Differenzfrequenz-Verteilungen noch keine Abstands- und Geschwindigkeitsermittlung durchführt.

Den im Weiteren unter Bezugnahme auf Fig. 1-5 sowie 9 bis 12 beschriebenen Ausführungsformen ist insoweit nämlich gemeinsam, dass die Abstands- und Geschwindigkeitsermittlung eines Objekts bzw. die entsprechende Szenenbild-Berechnung im Unterschied zu dem herkömmlichen, in Fig. 6a-6b und Fig. 7 dargestellten Konzept nicht unmittelbar basierend auf den mit der FMCW-Vorrichtung 100 ermittelten Differenzfrequenz-Verteilungen für "up-chirp" und "down-chirp" erfolgt, sondern zunächst eine im Weiteren beschriebene Angleichung dieser Differenzfrequenz-Verteilungen vorgenommen wird.

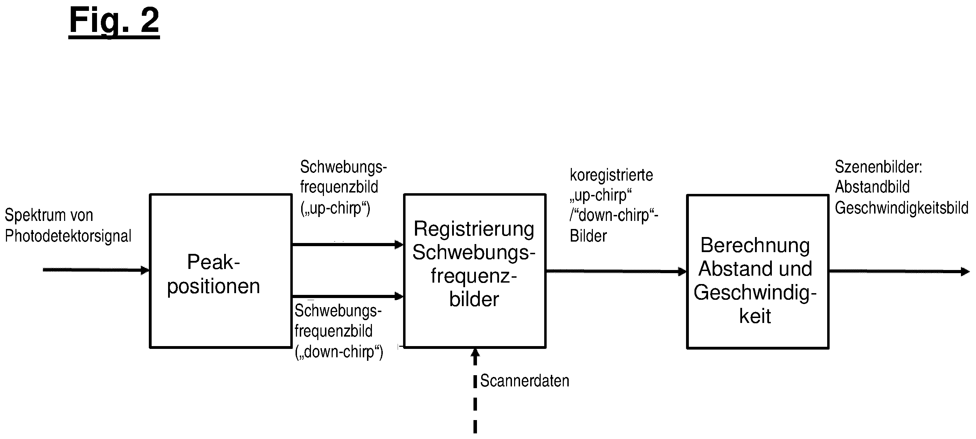

Unter Bezugnahme zunächst auf Fig. 1 stellt somit die FMCW-Vorrichtung 100 sowohl für den "up-chirp" als auch für den "down-chirp" zunächst separate Schwebungsfrequenzbilder bzw. örtliche Differenzfrequenz-Verteilungen bereit. Sodann erfolgt erfindungsgemäß zunächst eine Angleichung der beiden Differenzfrequenz-Verteilungen (d.h. der Schwebungsfrequenzbilder für "up-chirp" und "down-chirp"), was gemäß Fig. 2 einer Registrierung der betreffenden Schwebungsfrequenzbilder entspricht. Diese Angleichung bzw. Registrierung beinhaltet die Durchführung einer Transformation der ersten und/oder der zweiten örtlichen Differenzfrequenz-Verteilung, welche im Ausführungsbeispiel von Fig. 1-3 basierend auf den Differenzfrequenz-Verteilungen selbst (d.h. den jeweiligen Peak-Positionen in den Detektorsignal-Spektren) berechnet wird.

Hinsichtlich für sich bekannten Methoden der Registrierung wird auf die Publikationen D. Lowe: "Distinctive image features from scale-invariant keypoints", International Journal of Computer Vision 60 (2004), Nr. 2, S. 91-110 und C. Stiller et al.: "The computation of motion", in: T. Reed (Hrsg.): "Digital Image Sequence Processing, Compression and Analysis", CRC Press (2005), S. 73-108, verwiesen.

Die Berechnung von Abstand und Geschwindigkeit des Objekts bzw. Ermittlung der entsprechenden Szenenbilder erfolgt erfindungsgemäß - wie in Fig. 2 dargestellt - erst auf Basis der angeglichenen bzw. koregistrierten Schwebungsfrequenzbilder, so dass die beim eingangs beschriebenen herkömmlichen Ansatz (mit unmittelbarer Verwendung der nicht angeglichenen Differenzfrequenz-Verteilungen) bestehenden Probleme und eine entsprechend fehlerhafte Bestimmung der Szenerie vermieden werden.

Mit der o.g. Durchführung einer Transformation der ersten und/oder der zweiten örtlichen Differenzfrequenz-Verteilung ist gemeint, dass alternativ entweder nur eine der beiden Differenzfrequenz-Verteilungen an die jeweils andere (unverändert gelassene) Verteilung angepasst oder auch beide Differenzfrequenz-Verteilungen jeweils transformiert und auf diese Weise einander angenähert werden können.

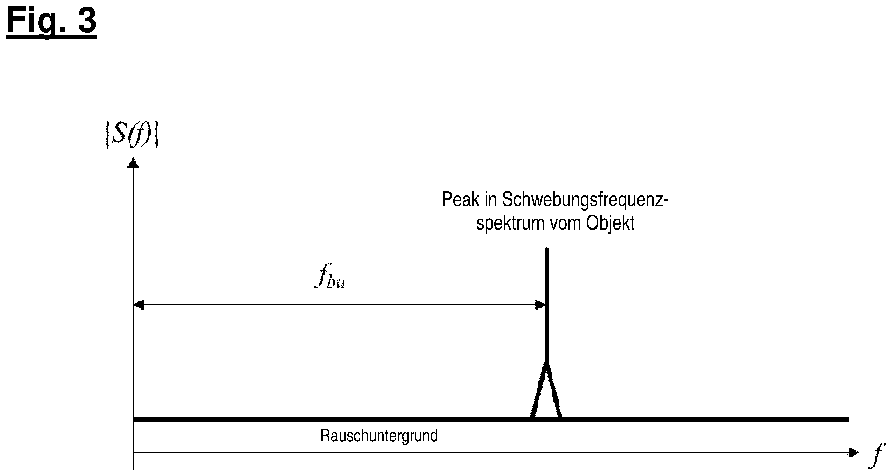

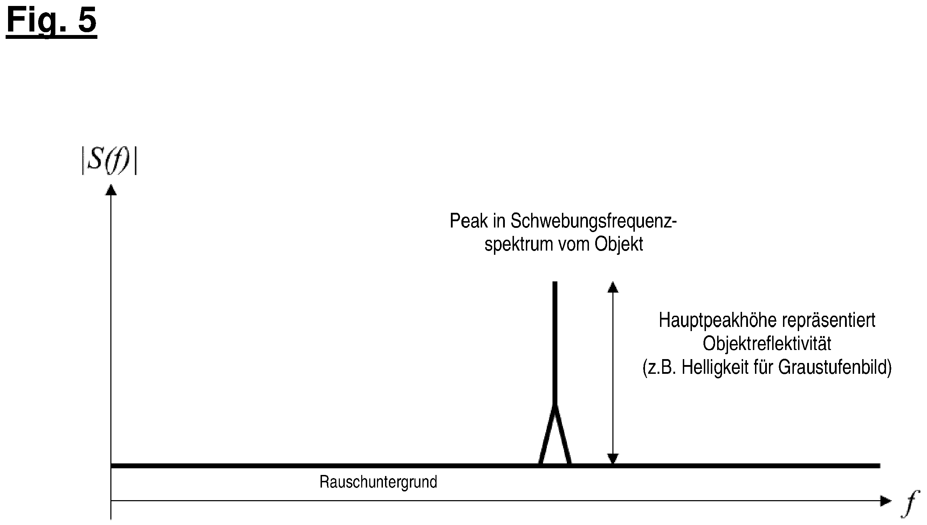

In weiteren Ausführungsformen der Erfindung kann die Berechnung der zum Angleichen der (für "up-chirp" und "down-chirp" erhaltenen) Differenzfrequenz-Verteilungen nicht (oder nicht allein) basierend auf den Differenzfrequenz-Verteilungen selbst bzw. den jeweiligen Peakpositionen im Detektorsignal-Spektrum (vgl. Fig. 3), sondern zusätzlich oder alternativ auch basierend auf den zu den Differenzfrequenz-Verteilungen jeweils gehörenden Signalstärke-Verteilungen (d.h. basierend auf den Peakhöhen in den jeweiligen Detektorsignal-Spektren, vgl. Fig. 5) erfolgen.

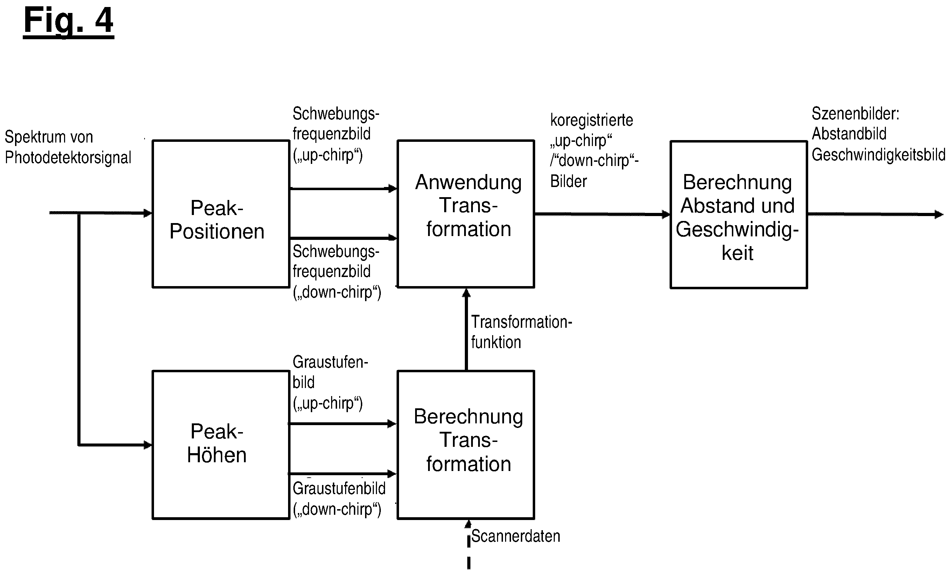

Fig. 4 zeigt hierzu in Abwandlung von Fig. 2 ein Diagramm, gemäß dem die Berechnung der o.g. Transformation auf Basis der Peakhöhen in den jeweiligen Detektorsignal-Spektren (d.h. basierend auf den zu den jeweiligen Differenzfrequenz-Verteilungen für "up-chirp" und "down-chirp" gehörenden Signalstärke-Verteilungen) berechnet wird. Die Anwendung der so berechneten Transformation auf die für "up-chirp" und "down-chirp" ermittelten Schwebungsfrequenzbilder liefert wiederum koregistrierte und entsprechend angeglichene Schwebungsfrequenzbilder bzw. Differenzfrequenz-Verteilungen, die dann - insoweit analog zur Ausführungsform von Fig. 1-3 - zur Abstands- und Geschwindigkeitsberechnung sowie Bereitstellung entsprechender Szenenbilder verwendet werden.

Die vorstehend genannte Transformation wenigstens einer der Differenzfrequenz-Verteilungen bzw. die entsprechende Bildverarbeitung erfolgt dabei in Ausführungsformen der Erfindung auch nicht-verzerrungsfrei ("non-rigid"). Mit anderen Worten ist die für die Bildanpassung ("Matching") durchgeführte Transformation nicht auf Verschiebungen, Skalierungen, Drehungen, Scherungen oder perspektivische Transformationen beschränkt.

### 2. Zweites Ausführungsbeispiel

Besonders vorteilhaft ist das Verfahren bei FMCW LIDAR Systemen mit einer dispersiven Scan-Achse einsetzbar. Hierbei wird die Frequenzmodulation des Lasers neben der Abstandsmessung auch zur Bewegung des Scan-Strahls in der Szene genutzt. Dazu kommt ein dispersives Element (z.B. Gitter) im Scanner zum Einsatz. Bei dispersiv scannenden LIDAR Systemen ist es von Vorteil, die einzelnen zeitlichen Segmente der Frequenzmodulation ("up-chirp" bzw. "down-chirp") zeitlich nicht zu kurz zu wählen. Dies bedeutet aber gleichzeitig, dass die auf diesen zeitlichen Segmenten basierenden Differenzfrequenz-Verteilungen zeitlich weit auseinander liegen können. Finden nun Bewegungen in der Szene statt (z.B. fahrendes Fahrzeug) oder führt beispielsweise eine zweite rotierende Scan-Achse eine Drehbewegung durch, sind die Positionen von Objekten in der Szene für die jeweilige Entstehung der Differenzfrequenz-Verteilungen während den zeitlichen Segmenten der Frequenzmodulation unterschiedlich. Mit anderen Worten: Während dem "up-chirp" befinden sich Objekte im Bild an einer anderen Position als im "down-chirp".

Da das Abstands- und Geschwindigkeitsbild beim FMCW-LIDAR aus einer punktweisen Verrechnung von Differenzfrequenzen in der Up-Chirp-Differenzfrequenz-Verteilung und in der Down-Chirp-Differenzverteilung entsteht, führt dies zu fehlerhaften Messpunkten.

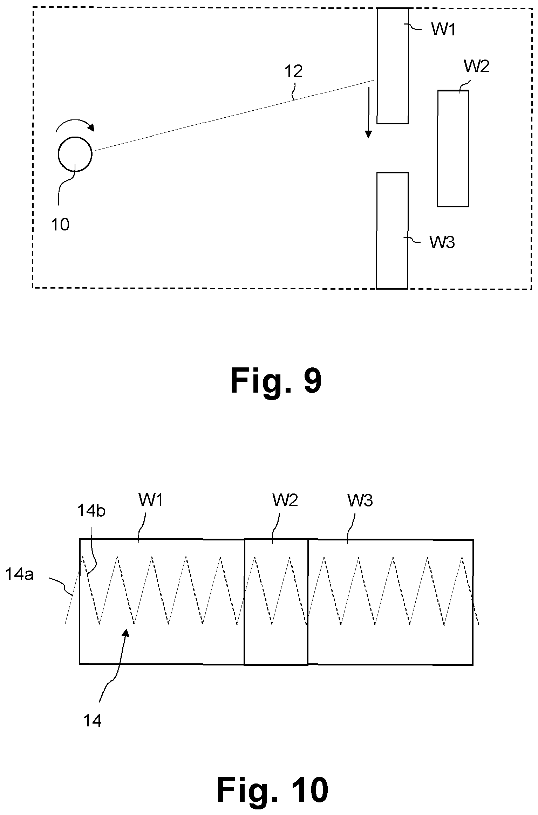

Als einfaches Beispiel wird hier die in der Figur 9 gezeigte Szene angenommen, bei welcher der LIDAR Scanner drei Wände W1, W2 und W3 abscannt. Die Wand W2 ist dabei etwas weiter vom Scanner entfernt als die Wände W1 und W3.

Die horizontale Scan-Achse wird durch eine Rotation eines Scanspiegels 10 gebildet.

Die vertikale Achse soll dispersiv gebildet werden. Der Einfachheit halber wird angenommen, dass der Scan-Strahl 12 auf der Wand durch die Scanner-Roatation mit konstanter Geschwindigkeit in der durch eine Pfeil angedeuteten Richtung, d.h. von links nach rechts, läuft. Zusätzlich wird nur ein Scan-Strahl 12 betrachtet. Mit diesem einen Scan-Strahl 12 entsteht durch die mechanische Scan-Bewegung und durch die zweite dispersive Achse bereits ein einfaches LIDAR-Bild und als Vorstufe dieses Bildes zwei Differenzfrequenz-Verteilungen.

Wie bereits erwähnt, werden die Wände W1 bis W3 in links-rechts-Richtung durch die Drehbewegung des Scanspiegels 10 gescannt; der Scan-Vorgang in vertikaler Richtung wird durch ein dispersives System bewirkt. Durch die Frequenzmodulation mit steigender Frequenz in ersten Teilsegmenten ("up-chirp") und fallender Frequenz in zweiten Teilsegmenten ("down-chirp") wird zusammen mit dem dispersiven Element im Scanner eine sägezahnartige Scan-Trajektorie 14 erreicht, wie sie in der Figur 10 gezeigt ist. Die durchgezogenen Linien 14a stellen die Up-Chirp-Teile und die gestrichelten Linien 14b die Down-Chirp-Anteile dar.

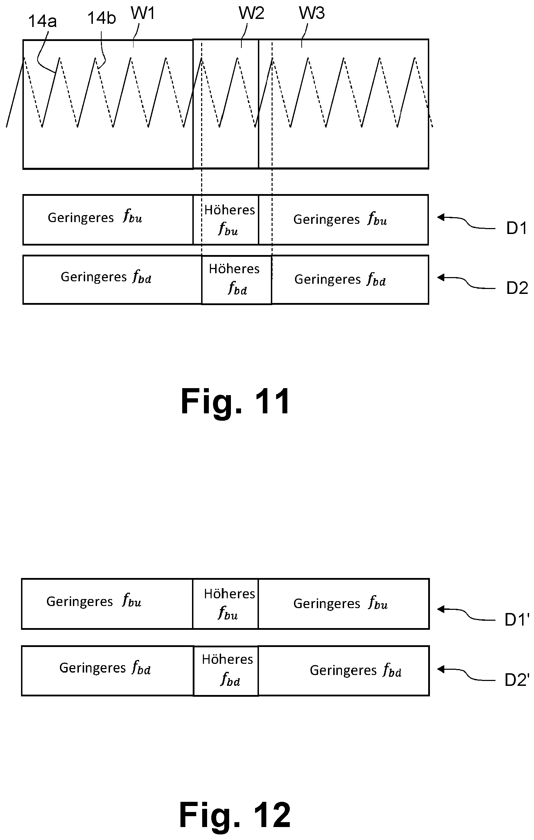

Die Figur 11 illustriert, wie aufgrund des zeitlichen Versatzes von Up-Chirp und Down-Chirp die entsprechenden Teile in den Differenzfrequenz-Verteilungen D1, D2 gegeneinander verschoben sind. Ein entfernteres Objekt (Wand W2) führt in diesem Beispiel zu einer höheren Differenzfrequenz als ein nahes Objekt (Wände W1 und W3). Die Differenzfrequenz im Up-Chirp ist in der Figur 11 mit *f_{bu}* und die Differenzfrequenz im Down-Chirp mit *f_{bd}.* bezeichnet. Anstelle oder zusätzlich zu der dargestellten reinen Verschiebung können je nach Szeneninhalt die beiden Differenzfrequenz-Verteilungen D1, D2 auch leicht verzeichnet sein.

Die in der Figur 11 erkennbaren Kanten, d.h. Sprünge in den Differenzfrequenz-Verteilungen D1, D2, können dazu verwendet werden, um die Schwebungsfrequenzbilder zu registrieren, bevor die Berechnung von Abstand und Geschwindigkeit erfolgt. Die Bildregistrierung, mit der die Kanten überlagert werden, kann mit gängigen Methoden der Bildverarbeitung erfolgen.

Die Figur 12 zeigt die Differenzfrequenz-Verteilungen D1', D2' nach der Registrierung.

Die Kanten sind nun vollständig überlagert. Würde die Registrierung nicht vorgenommen werden, würden an den Kanten falsche Messungen entstehen, da nicht zueinander passende Werte für Schwebungsfrequenzen im Up-Chirp und Down-Chirp einander zugeordnet würden.

Die in diesem Beispiel dargestellten Ansätze können auch auf komplexere Szenen übertragen werden, die mit mehreren Scan-Strahlen erfasst werden. Zusätzlich zu Kanten könnten dann beispielsweise auch Ecken in Schwebungsfrequenzbildern genutzt werden, um die für die Registrierung der Bilder erforderliche Transformation zu berechnen.

Statt zur Registrierung die Schwebungsfrequenzinformation zu verwenden, kann es von Vorteil sein, die ebenfalls vorhandene Graustufeninformation heranzuziehen, wie dies oben mit Bezug auf die Figur 4 erläutert wurde. Dies hat den Vorteil, dass auch Texturen zur Bildregistrierung genutzt werden können, die im Schwebungsfrequenzbild nicht sichtbar wären. Eine Wand in konstantem Abstand hätte im Schwebungsfrequenzbild einen konstanten Wert. Im Graustufenbild, welches aus den Peak-Höhen extrahiert wird (vgl. Figur 5), könnte beispielsweise auch die Helligkeits-Textur auf der Wand zur Bildregistrierung herangezogen werden.

## Patentansprüche

1. Verfahren zur scannenden Abstands- und Geschwindigkeitsermittlung wenigstens eines Objekts, wobei das Verfahren folgende Schritte aufweist:
• Aussenden, unter Verwendung einer Lichtquelle, eines optischen Signals mit zeitlich variierender Frequenz;
• Bestimmen einer ersten örtlichen Differenzfrequenz-Verteilung (D1), welche für unterschiedliche Pixel der ersten örtlichen Differenzfrequenz-Verteilung (D1) jeweils die Differenzfrequenz (f_{bu}) zwischen einem aus dem optischen Signal hervorgegangenen, an einem Objektpunkt auf dem wenigstens einem Objekt (W1, W2, W3) reflektierten Messsignal und einem nicht an dem Objekt (W1, W21, W3) reflektierten Referenzsignal angibt;
• Bestimmen einer zweiten örtlichen Differenzfrequenz-Verteilung (D2), welche für unterschiedliche Pixel der zweiten örtlichen Differenzfrequenz-Verteilung (D2) jeweils die Differenzfrequenz zwischen einem aus dem optischen Signal hervorgegangenen, an einem Objektpunkt auf dem wenigstens einen Objekt (W1, W21, W3) reflektierten Messsignal und einem nicht an dem Objekt (W1, W21, W3) reflektierten Referenzsignal angibt;
**gekennzeichnet durch** folgende weitere Schritte:
• Angleichen der ersten und der zweiten Differenzfrequenz-Verteilung unter Durchführung einer Transformation der jeweiligen Pixel der ersten und/oder der zweiten örtlichen Differenzfrequenz-Verteilung derart, dass nach dieser Angleichung in den beiden Differenzfrequenz-Verteilungen (D1', D2') einander korrespondierende Pixel vom gleichen Objektpunkt herrühren, wobei die Durchführung der Transformation eine Koregistrierung zwischen der ersten und der zweiten Differenzfrequenz-Verteilung (D1, D2) umfasst; und
• Ermitteln von Abstand und Geschwindigkeit für jeden Objektpunkt auf dem wenigstens einen Objekt (W1, W21, W3) unter Verwendung der beiden angeglichenen Differenzfrequenz-Verteilungen (D1', D2').

2. Verfahren nach Anspruch 1 , **dadurch gekennzeichnet, dass** sich die für die Bestimmung der ersten örtlichen Differenzfrequenz-Verteilung (D1) und die für die Bestimmung der zweiten örtlichen Differenzfrequenz-Verteilung (D2) jeweils herangezogenen Messsignale hinsichtlich der Zeitabhängigkeit der Frequenz des verwendeten optischen Signals voneinander unterscheiden.

3. Verfahren nach Anspruch 1 oder 2, **dadurch gekennzeichnet, dass** die zum Angleichen der ersten und der zweiten Differenzfrequenz-Verteilung (D1, D2) durchgeführte Transformation eine nicht-affine Transformation ist.

4. Verfahren nach einem der vorhergehenden Ansprüche, **dadurch gekennzeichnet, dass** die zum Angleichen der ersten und der zweiten Differenzfrequenz-Verteilung (D1, D2) durchgeführte Transformation basierend auf den Differenzfrequenz-Verteilungen (D1, D2) berechnet wird.

5. Verfahren nach einem der vorhergehenden Ansprüche, **dadurch gekennzeichnet, dass** die zum Angleichen der ersten und der zweiten Differenzfrequenz-Verteilung (D1, D2) durchgeführte Transformation basierend auf den jeweiligen zu den Differenzfrequenz-Verteilungen gehörenden Signalstärke-Verteilungen berechnet wird.

6. Verfahren nach einem der vorhergehenden Ansprüche, **dadurch gekennzeichnet, dass** die zum Angleichen der ersten und der zweiten Differenzfrequenz-Verteilung (D1, D2) durchgeführte Transformation sowohl basierend auf den Differenzfrequenz-Verteilungen (D1, D2) als auch basierend auf den jeweiligen zu den Differenzfrequenz-Verteilungen (D1, D2) gehörenden Signalstärke-Verteilungen berechnet wird.

7. Verfahren nach einem der vorhergehenden Ansprüche, **dadurch gekennzeichnet, dass** ein Abstandsbild und ein Geschwindigkeitsbild einer Szene berechnet werden, wobei jedes Pixel innerhalb des Abstands- bzw. Geschwindigkeitsbildes jeweils einen Abstands- bzw. Geschwindigkeitswert innerhalb der Szene repräsentiert.

8. Vorrichtung zur scannenden Abstands- und Geschwindigkeitsermittlung wenigstens eines Objekts (W1, W2, W3), mit
einer Lichtquelle (610), die dazu eingerichtet ist, ein Signal (611) mit zeitlich veränderter Frequenz zu erzeugen,
einem Strahlteiler, der dazu eingerichtet ist, das Signal in zwei Teilsignale aufzuspalten,
einem Detektor (650),
einem optischen Zirkulator (620),
einem Signalkoppler (645) und mit
einem Scanner (630),
wobei
das erste Teilsignal als Referenzsignal (622) ohne Reflexion an dem Objekt (W1, W2, W3) zum Signalkoppler (645) und zum Detektor (650) gelangt, und
das zweite am Signalkoppler (645) und am Detektor (650) eintreffende Teilsignal als Messsignal (621) über den optischen Zirkulator (620) und den Scanner (630) zum Objekt (640) verläuft, von diesem zurückreflektiert und somit im Vergleich zum Referenzsignal (622) mit einer Zeitverzögerung und entsprechend veränderter Frequenz zum Signalkoppler (645) und zum Detektor (650) gelangt,
eine Auswerteeinrichtung (660), die dazu eingerichtet ist, ein vom Detektor (650) geliefertes Detektorsignal auszuwerten, wobei eine zu einem bestimmten Zeitpunkt erfasste Differenzfrequenz zwischen dem Messsignal (621) und dem Referenzsignal (622) charakteristisch für den Abstand des Objekts (640) von der Vorrichtung bzw. der Lichtquelle (610) ist, wobei die Auswerteeinrichtung dazu eingerichtet ist, die folgenden Schritte durchzuführen:
• Bestimmen einer ersten örtlichen Differenzfrequenz-Verteilung (D1), welche für unterschiedliche Pixel der ersten örtlichen Differenzfrequenz-Verteilung (D1) jeweils die Differenzfrequenz (f_{bu}) zwischen dem aus dem optischen Signal hervorgegangenen, an einem Objektpunkt auf dem wenigstens einem Objekt (W1, W2, W3) reflektierten Messsignal und dem nicht an dem Objekt (W1, W21, W3) reflektierten Referenzsignal angibt;
• Bestimmen einer zweiten örtlichen Differenzfrequenz-Verteilung (D2), welche für unterschiedliche Pixel der zweiten örtlichen Differenzfrequenz-Verteilung (D2) jeweils die Differenzfrequenz zwischen dem aus dem optischen Signal hervorgegangenen, an einem Objektpunkt auf dem wenigstens einen Objekt (W1, W21, W3) reflektierten Messsignal und dem nicht an dem Objekt (W1, W21, W3) reflektierten Referenzsignal angibt;
**gekennzeichnet durch** folgende weitere Schritte:
• Angleichen der ersten und der zweiten Differenzfrequenz-Verteilung unter Durchführung einer Transformation der jeweiligen Pixel der ersten und/oder der zweiten örtlichen Differenzfrequenz-Verteilung derart, dass nach dieser Angleichung in den beiden Differenzfrequenz-Verteilungen (D1', D2') einander korrespondierende Pixel vom gleichen Objektpunkt herrühren, wobei die Durchführung der Transformation eine Koregistrierung zwischen der ersten und der zweiten Differenzfrequenz-Verteilung (D1, D2) umfasst; und
• Ermitteln von Abstand und Geschwindigkeit für jeden Objektpunkt auf dem wenigstens einen Objekt (W1, W21, W3) unter Verwendung der beiden angeglichenen Differenzfrequenz-Verteilungen (D1', D2').

## Claims

1. A method for scanning determination of distance and velocity of at least one object, the method comprising the following steps:
• emitting, using a light source, an optical signal having a frequency that varies over time;
• determining a first spatial beat-frequency distribution (D1), which, for each of different pixels of the first spatial beat-frequency distribution (D1), indicates the beat frequency (f_{bu}) between a measurement signal derived from the optical signal and reflected at an object point on the at least one object (W1, W2, W3), and a reference signal not reflected at the object (W1, W21, W3);
• determining a second spatial beat-frequency distribution (D2), which, for each of different pixels of the second spatial beat-frequency distribution (D2), indicates the beat frequency between a measurement signal derived from the optical signal and reflected at an object point on the at least one object (W1, W21, W3), and a reference signal not reflected at the object (W1, W21, W3);
**characterized by** the following further steps:
• aligning the first and second beat-frequency distributions by performing a transformation of the respective pixels of the first and/or the second spatial beat-frequency distribution such that, after the alignment, mutually corresponding pixels in the two beat-frequency distributions (D1', D2') originate from the same object point, wherein performing the transformation comprises co-registration between the first and second beat-frequency distributions (D1, D2); and
• determining distance and velocity for each object point on the at least one object (W1, W21, W3) using the two aligned beat-frequency distributions (D1', D2').

2. The method according to claim 1, **characterized in that** the measurement signals used for determining the first spatial beat-frequency distribution (D1) and for determining the second spatial beat-frequency distribution (D2), respectively, differ from one another in terms of the time dependence of the frequency of the optical signal used.

3. The method according to claim 1 or 2, **characterized in that** the transformation performed for aligning the first and second beat-frequency distributions (D1, D2) is a non-affine transformation.

4. The method according to any one of the preceding claims, **characterized in that** the transformation performed for aligning the first and second beat-frequency distributions (D1, D2) is calculated on the basis of the beat-frequency distributions (D1, D2).

5. The method according to any one of the preceding claims, **characterized in that** the transformation performed for aligning the first and second beat-frequency distributions (D1, D2) is calculated on the basis of the respective signal-strength distributions associated with the beat-frequency distributions.

6. The method according to any one of the preceding claims, **characterized in that** the transformation performed for aligning the first and second beat-frequency distributions (D1, D2) is calculated both on the basis of the beat-frequency distributions (D1, D2) and on the basis of the respective signal-strength distributions associated with the beat-frequency distributions (D1, D2).

7. The method according to any one of the preceding claims, **characterized in that** a distance image and a velocity image of a scene are calculated, wherein each pixel within the distance image and the velocity image represents a distance value and a velocity value, respectively, within the scene.

8. An apparatus for scanning determination of distance and velocity of at least one object (W1, W2, W3), comprising:
a light source (610) configured to generate a signal (611) having a frequency that varies over time;
a beam splitter configured to split the signal into two partial signals;
a detector (650);
an optical circulator (620);
a signal coupler (645); and
a scanner (630);
wherein
the first partial signal reaches the signal coupler (645) and the detector (650) as a reference signal (622) without being reflected at the object (W1, W2, W3); and
the second partial signal arriving at the signal coupler (645) and the detector (650) travels, as a measurement signal (621), via the optical circulator (620) and the scanner (630) to the object (640), is reflected back by the object and thus, in comparison with the reference signal (622), reaches the signal coupler (645) and the detector (650) with a time delay and a correspondingly changed frequency;
an evaluation unit (660) configured to evaluate a detector signal supplied by the detector (650), wherein a beat frequency detected at a particular point in time between the measurement signal (621) and the reference signal (622) is characteristic of the distance of the object (640) from the apparatus or the light source (610), respectively, wherein the evaluation unit is configured to perform the following steps:
• determining a first spatial beat-frequency distribution (D1), which, for each of different pixels of the first spatial beat-frequency distribution (D1), indicates the beat frequency (f_{bu}) between the measurement signal derived from the optical signal and reflected at an object point on the at least one object (W1, W2, W3), and the reference signal not reflected at the object (W1, W21, W3);
• determining a second spatial beat-frequency distribution (D2), which, for each of different pixels of the second spatial beat-frequency distribution (D2), indicates the beat frequency between the measurement signal derived from the optical signal and reflected at an object point on the at least one object (W1, W21, W3), and the reference signal not reflected at the object (W1, W21, W3);
**characterized by** the following further steps:
• aligning the first and second beat-frequency distributions by performing a transformation of the respective pixels of the first and/or the second spatial beat-frequency distribution such that, after the alignment, mutually corresponding pixels in the two beat-frequency distributions (D1', D2') originate from the same object point, wherein performing the transformation comprises co-registration between the first and second beat-frequency distributions (D1, D2); and
• determining distance and velocity for each object point on the at least one object (W1, W21, W3) using the two aligned beat-frequency distributions (D1', D2').

## Revendications

1. Procédé de détermination, par balayage, de la distance et de la vitesse d'au moins un objet, dans lequel le procédé comporte les étapes suivantes:
• émission d'un signal optique à partir d'une source de lumière avec une fréquence qui varie selon le temps;
• détermination d'une première distribution (D1) de fréquence différentielle locale, qui spécifie, pour différents pixels de la première distribution (D1) de fréquence différentielle locale, la fréquence différentielle (f_{bu}) entre un signal de mesure provenant du signal optique et étant réfléchi à un point d'objet sur l'au moins un objet (W1, W2, W3) et un signal de référence n'étant pas réfléchi sur l'objet (W1, W2, W3);
• détermination d'une seconde distribution (D2) de fréquence différentielle locale, qui spécifie, pour différents pixels de la seconde distribution (D1) de fréquence différentielle locale, la fréquence différentielle entre un signal de mesure provenant du signal optique et étant réfléchi à un point d'objet sur l'au moins un objet (W1, W2, W3) et un signal de référence n'étant pas réfléchi sur l'objet (W1, W2, W3);
**caractérisé par** les étapes suivantes ultérieures:
• ajustement de la première et de la seconde distribution de fréquence différentielle par exécution d'une transformation des pixels respectifs de la première et/ou seconde distribution de fréquence différentielle locale de telle sorte que, après cet ajustement dans les deux distributions (D1', D2') de fréquence différentielle, des pixels correspondant entre eux proviennent du même point d'objet, dans lequel l'exécution de la transformation comporte une coregistration entre la première et la seconde distribution de fréquence différentielle (D1, D2); et
• détermination de la distance et de la vitesse pour chaque point d'objet sur ledit au moins un objet (W1, W2, W3) à l'aide des deux distributions (D1', D2') de fréquence différentielle ajustées.

2. Procédé selon la revendication 1, **caractérisé en ce que** les signaux de mesure utilisés respectivement pour déterminer la première distribution de fréquence différentielle locale (D1) et pour déterminer la seconde distribution (D2) de fréquence différentielle locale se distinguent l'un de l'autre par la dépendance temporelle de la fréquence du signal optique utilisé.

3. Procédé selon la revendication 1 ou 2, **caractérisé en ce que** la transformation exécutée pour l'ajustement de la première et la seconde distribution (D1, D2) de fréquence différentielle est une transformation non affine.

4. Procédé selon l'une quelconque des revendications précédentes, **caractérisé en ce que** la transformation exécutée pour l'ajustement de la première et la seconde distribution (D1, D2) de fréquence différentielle est calculée sur la base des distributions (D1, D2) de fréquence différentielle.

5. Procédé selon l'une quelconque des revendications précédentes, **caractérisé en ce que** les transformations exécutées pour l'ajustement de la première et la seconde distribution (D1, D2) de fréquence différentielle est calculée sur la base des distributions de l'intensité du signal associées aux distributions de fréquence différentielle.

6. Procédé selon l'une quelconque des revendications précédentes, **caractérisé en ce que** la transformation exécutée pour l'ajustement de la première et la seconde distribution (D1, D2) de fréquence différentielle est calculée non seulement sur la base des distributions (D1, D2) de fréquence différentielle mais aussi sur la base des distributions de l'intensité du signal associées aux distributions de fréquence différentielle (D1, D2).

7. Procédé selon l'une quelconque des revendications précédentes, **caractérisé en ce qu'**une image de distance et une image de vitesse d'une scène sont calculées, dans lequel chaque pixel de l'image de distance et/ou de l'image de vitesse représente respectivement une valeur de distance et/ou une valeur de vitesse au sein de la scène.

8. Dispositif de détermination, par balayage, de la distance et de la vitesse d'au moins un objet (W1, W2, W3) comportant:
une source de lumière (610) conçue pour générer un signal (611) dont la fréquence varie dans le temps,
un diviseur de signal conçu pour diviser le signal en deux signaux partiels,
un détecteur (650),
un circulateur optique (620),
un coupleur de signaux (645) et comportant
un scanner (630),
dans lequel
le premier signal partiel, en tant que signal de référence (622) parvient au coupleur de signaux (645) et au détecteur (650) sans être réfléchi par l'objet,
et
le seconde signal partiel arrivant au coupleur de signaux (645) et au détecteur (659) est acheminé vers l'objet (640) en tant que signal de mesure (621) via le circulateur optique (620) et le scanner (630), où **il** est réfléchi, puis renvoyé vers le coupleur de signaux (645) et le détecteur (650) avec un retard par rapport au signal de référence (622) et une fréquence modifiée en conséquence,
un dispositif d'évaluation (660) qui est conçu pour évaluer un signal du détecteur fourni par le détecteur (650), dans lequel une fréquence différentielle, mesurée à un instant donné, entre le signal de mesure (621) et le signal de référence (622) est caractéristique de la distance séparant l'objet (640) du dispositif et/ou de la source de lumière (610), dans lequel le dispositif d'évaluation est conçu pour exécuter les étapes suivantes:
• détermination d'une première distribution (D1) de fréquence différentielle locale, qui spécifie, pour différents pixels de la première distribution (D1) de fréquence différentielle locale, la fréquence différentielle (f_{bu}) entre le signal de mesure provenant du signal optique et étant réfléchi à un point d'objet sur l'au moins un objet (W1, W2, W3) et le signal de référence n'étant pas réfléchi sur l'objet (W1, W2, W3);
• détermination d'une seconde distribution (D2) de fréquence différentielle locale, qui spécifie, pour différents pixels de la seconde distribution (D1) de fréquence différentielle locale, la fréquence différentielle entre un signal de mesure provenant du signal optique et étant réfléchi à un point d'objet sur l'au moins un objet (W1, W2, W3) et le signal de référence n'étant pas réfléchi sur l'objet (W1, W2, W3);
**caractérisé par** les étapes suivantes ultérieures:
• ajustement de la première et la seconde distribution de fréquence différentielle par exécution d'une transformation des pixels respectifs des première et/ou seconde distribution de fréquence différentielle locale de telle sorte que, après cet ajustement dans les deux distributions (D1', D2') de fréquence différentielle, des pixels correspondant entre eux proviennent du même point d'objet, dans lequel l'exécution de la transformation comporte une coregistration entre la première et la seconde distribution de fréquence différentielle (D1, D2); et
• détermination
• détermination de la distance et de la vitesse pour chaque point d'objet sur ledit au moins un objet (W1, W2, W3) à l'aide des deux distributions (D1', D2') de fréquence différentielle ajustées.
